# EUROPEAN PATENT SPECIFICATION

(11) **EP 3 390 208 B1**
(45) Date of publication and mention of the grant of the patent: **22.05.2019**
(21) Application number: 16822945.8
(22) Date of filing: 16.12.2016
(51) Int. Cl.: B62D 35/00

(54) **METHOD FOR OPTIMIZING A POSITION OF AN AIR DEFLECTOR GUIDING AN AIRFLOW AROUND A VEHICLE AND AN AIR GUIDING DEVICE**
VERFAHREN ZUR OPTIMIERUNG DER POSITION EINES LUFTUMLENKERS, DER EINEN LUFTSTROM UM EIN FAHRZEUG LEITET, UND LUFTLEITVORRICHTUNG
PROCÉDÉ POUR OPTIMISER UNE POSITION DE DÉFLECTEUR D'AIR GUIDANT UN FLUX D'AIR AUTOUR D'UN VÉHICULE, ET DISPOSITIF DE GUIDAGE D'AIR

(30) Priority: 18.12.2015 SE 1551676
(43) Date of publication of application: 24.10.2018
(73) Proprietor: RMBLStrip AB, 590 77 Vreta Kloster (SE)
(72) Inventor: KRISTIANSSON, Gustav, 590 77 Vreta Kloster (SE)
(74) Representative: AWA Sweden AB
(86) International application number: PCT/EP2016/081479
(87) International publication number: WO 2017/103143

(56) References cited:
- EP-A1- 2 626 281
- EP-A1- 2 915 726
- DE-A1-102008 052 518

## Description

### Technical field

The disclosure is related to a method for optimizing a position of an air deflector guiding an airflow around a ground automotive vehicle during driving in order to minimize air drag and fuel consumption. The disclosure is also related to an air guiding device for a ground automotive vehicle.

### Background

Vehicles, such as heavy trucks carrying a load and trucks towing a trailer, are often equipped with air guiding devices, air deflectors, located on the roof of the truck cab and/or on respective lateral sides of the truck cab, for reducing air drag during journey and thereby reducing fuel consumption of the vehicle.

When travelling, vehicles displace air, and for a vehicle carrying load or towing a trailer which extends upwards and/or sideways beyond the vehicle, the front surface of extended parts of the load or trailer will cause significant air drag. The air guiding device, if correctly aligned, redirects the air which is moving over the moving vehicle in such a way that the air does not hit the front edge of the trailer or the load carried by the vehicle but instead the air is moving over the roof or along the sides of the carried load or the trailer.

The dimensions of trailers and of load carried by the vehicle often vary, why for optimal reduction of the air drag, the air guiding devices should be adjustable and adjusted for each truck-load or truck-trailer combination.

GB-2465393 discloses an air deflector system for use on a commercial vehicle. The system comprises air guiding devices and a plurality of pressure sensors provided on the air guiding devices. The pressure sensors sense the pressure on the air guiding devices during the travel of the vehicle. The sensed pressures form output signals transmitted to a control unit, which is configured to control the position of each air guiding device so as to alter the aerodynamic profile of the vehicle in response to the outputs of the pressure sensors, a speed signal and data relating to the geometry of the vehicle.

EP2626281 A1 discloses an air guiding device for automotive ground vehicles in which the air guiding device can be automatically adjusted by means of an adjuster in the form of an electric motor. A parameter corresponding to the adjustment force required by the adjuster during movement of the air guiding device from a first position to a second position is registered by a control unit. The control unit then adjusts the air guiding device into a position corresponding to a minimum value of the registered parameter, which position is a position corresponding to the lowest air resistance for the vehicle. For some circumstances it has been shown that the position corresponding to the minimum value does not correspond to the lowest air resistance.

EP2915726 A1 is building on the principles of EP2626281 A1. If the conditions during the adjustment process of EP2626281 A1 have been anomalous, for example, by the air guiding device being influenced by wind gusts, displaced air from oncoming vehicles or similar, the parameter that has been determined corresponding to the optimal condition for the lowest possible air resistance may be erroneous, such that the air guiding device is adjusted to a non-optimal condition, which results in an increased fuel consumption. In the method disclosed in EP2915726 A1 also the pressure of oncoming air against the vehicle in its direction of travel is continuously determined (e.g. by the air quantity gauge of the vehicle). The time course of the registered parameter is determined. Based on the determined pressure of the oncoming air and the time course of the registered parameter, the reliability of the time course of the parameter is determined.
Document EP 2 915 726 A1 discloses a method comprising the steps a) and b) of the independent claim 1, and an air guiding device according to the preamble of independent claim 14.

The known techniques disclosed above either need a plurality of sensors, or need to match an absolute value of a physical quantity of a subsystem with that of another adjacent system. The disadvantage of the former relates to the cost of the plurality of sensors as well as the challenge of accuracy when sensing parameters in discontinuous positions. The latter has the disadvantage that no matter how simple the construction, i.e. the support structure of the air guiding device, may be, the construction will need to be kept in a good condition to not alter the balance in the physical quantity one rely on. The harsh environment on the exterior of a heavy truck will expose any mechanical construction to mechanical wear, dirt, rust, etc., which may alter the variation of the physical quantity needed to move the air deflector from a first to a second position.

### Summary

The object of the present invention is to provide a method for, by means of an electric actuator, positioning an air guiding device in an optimal position resulting in minimum air drag and fuel consumption, which method overcomes at least some of the disadvantages with known techniques.

The invention is defined by the appended independent claims. Embodiments are set forth in the appended dependent claims and in the figures.

According to a first aspect, there is provided a method for optimizing a position of an air deflector guiding an airflow around a ground automotive vehicle during driving, comprising the steps of: a) moving the air deflector by means of an electric actuator from a first to a second position when the vehicle is moving in a forward direction, b) sensing a parameter of the electric actuator for moving the air deflector from the first to the second position, and registering a plurality of signal amplitudes of the sensed parameter. The method further comprises a step of c1) in a time domain, identifying a portion of consecutive registered signal amplitudes, which portion is defined by two positive signal amplitude peaks at each end of the portion, which positive signal amplitude peaks exceed a first threshold value, and an intermediate negative signal amplitude peak between the two positive signal amplitude peaks, which negative signal amplitude peak falls below a second threshold value, and identifying a position corresponding to a signal amplitude peak within the identified portion with a largest deviation from the first or second threshold value, and/or a step of c2) in a frequency domain, identifying center frequencies of pulses corresponding to registered signal amplitudes, and identifying a position corresponding to an identified center frequency of a pulse with a largest deviation from a frequency value. Thereafter the air deflector is moved to the identified position.

With a ground automotive vehicle is here meant a vehicle comprising a first vehicle body and a second vehicle body arranged behind the first vehicle body, as seen in a direction of normal forward driving of the vehicle. The second vehicle body may extend upwards and/or sideways of the first vehicle body. The first vehicle body may be a truck and the second vehicle body a load carried by the truck itself or a trailer towed by the truck.

For a truck carrying a load or towing a trailer which extends upwards and/or sideways beyond the truck, the front surface of extended parts of the load or trailer will cause significant air drag.

The air deflector may be arranged on the roof of the truck cab and/or on respective lateral sides of the truck cab. The air deflector may be arranged on the truck cab by means of a support structure.

The air deflector comprises a major essentially planar air-deflecting surface. An essentially planar surface here includes plane structures and structures with a radius (single- and/or double curved surfaces). The air deflector has a first edge and a second edge essentially opposite the first edge across the major air-deflecting surface. When located on the truck cab, the air deflector is arranged to be pivotable around its first edge to form an angle of inclination of the air-deflecting surface to a direction parallel with the normal forward direction of the moving vehicle. When the angle of inclination is changed from a first angle to a second angle, the second edge of the air deflector is correspondingly translated from a first position to a second position.

With position of the air deflector is here meant an angular, absolute or relative position of the air deflector. The position may for example be identified as a time value when moving the air deflector from the first to the second position.

If optimally positioned, the air deflector reduces air drag during journey and thereby reduces fuel consumption of the vehicle. In the optimal position an airflow is guided around the vehicle during driving, i.e. the air deflector redirects the air which is moving over the moving vehicle in such a way that the air does not hit the front edge of the trailer or the load carried by the vehicle but instead the air is moving over the roof or along the sides of the carried load or the trailer.

The air deflector is moved, swept, from a first to a second position when the vehicle is moving in a forward direction. This is here meant that the vehicle may be moving with a speed of 20 km/h to 130 km/h.

The sensed parameter of the electric actuator is here a parameter describing the status of the electric actuator during moving the air deflector from the first to the second position, e.g. current of the electric actuator, rotations per minute of a rotor of a motor, or a motor switching frequency. The sensed parameter relates to the electric actuator, thus not to power supplied to the electric actuator or force applied to the air deflector. The method rather analyses the registered signal amplitudes at hand, corresponding to the sensed parameter.

When the air deflector is moved from the first to the second position by means of the electric actuator the sensed parameter is influenced by both external and internal factors such as air loads exerted on the air deflector, internal friction, properties of the air deflector itself, such as weight or mechanical wear, and other internal/external disturbances. The sum of these typically increases as the second edge of the air-deflector is elevated towards its highest position (the air deflector being rotated around its first edge).

When the air deflector during the sweep from the first to the second position reaches and passes the optimal position, i.e. the position in which the air drag is the lowest and, hence, also the fuel consumption of the vehicle, the dampening effects of the air on the air deflector momentarily changes. There is a shift in character of the air load on the air deflector. This opens for a change in character in the external disturbances on the air deflector and is, hence, something that will momentarily affect the electric actuator and be seen in the sensed parameter and the corresponding registered signal amplitudes. Not only the change in character of the air loads will be visible in the sensed parameter and the corresponding registered signal amplitudes, but when the dampening is changed and external disturbance perturbs the air deflector and the electric actuator this change will too be visible in the sensed parameter and the registered signal amplitudes with a dampening different from disturbances outside the optimal position. This is seen as a discrepancy, amplified oscillation, in the registered signal amplitudes when the optimum position of the air deflector is reached. Immediately adjacent the optimum position the discrepancy of the registered signal amplitudes is noticeably lower.

The electric actuator will typically have a fundamental signal period and amplitude. When the air deflector is exposed to a disturbance, this disturbance will translate to the electric actuator and act as a decreasing or increasing resistance. This implies that the registered signal amplitudes will oscillate due to disturbances induced when the air deflector passes its optimum position. The air deflector, the support construction and the electric actuator will act as something similar to a spring-damper system. When the optimal position is passed, due to the fact that the turbulence in the air flow will shift in character, a distinct disturbance will be induced when the vortices change direction over the air deflector. This disturbance will decelerate or accelerate the electric actuator momentarily (compare with a momentary off-loading or on-loading of a motor), which will be seen as a shift in the fundamental/carrier frequency of the electric actuator (rotation of the electric actuator). In the optimum position, due to the smoother airflow, the air mass acting as the damper in the spring-mass system will be substantially lower than when the deflector is positioned above or below the optimum position, resulting in disturbances on the air deflector being easier amplified as the airflow is now in a sort of temporary equilibrium. If the air deflector is lower, this equilibrium changes as it does if the air deflector is slightly higher. Therefore, around the optimal position, there will be oscillations that are amplified compared to oscillations at other positions of the air deflector.

In the method, in the time domain, a portion of consecutive registered signal amplitudes is identified. The portion is defined by two positive signal amplitude peaks at each end of the portion, which positive signal amplitude peaks exceed a first threshold value, and an intermediate negative signal amplitude peak between the two positive signal amplitude peaks, which negative signal amplitude peak falls below a second threshold value. A position corresponding to a signal amplitude peak within the identified portion with a largest deviation from the first or second threshold value is identified and the air deflector moved to this position. This position then corresponds to an optimal or close to optimal position of the air deflector.

The identified portion, hence, corresponds to at least a segment of the above described amplified oscillations.

That the signal amplitude peaks exceed/fall below a first/second threshold value is here meant that the signal amplitude is equal to or higher/lower than the first/second threshold value.

The electric actuator will typically rotate with a fundamental/carrier frequency. By evaluating the registered signal amplitudes and frequencies in the frequency domain, one will be able to detect a momentarily shift in the fundamental frequency (rotation of the electric actuator) and correlate this change in frequency to the disturbance that the air deflector is exposed to.

In the frequency domain, center frequencies of pulses corresponding to registered signal amplitudes are identified, and a position corresponding to an identified center frequency of a pulse with a largest deviation from a frequency value identified. Thereafter the air deflector is moved to the identified position which correspond to an optimal or close to optimal position of the air deflector.

One way of analyzing the registered signal and the oscillations in the frequency domain is by applying a Fast Fourier Transform based signal analysis. The oscillations are detected by applying a frequency analysis to evaluate the energy distribution per frequency (e.g. Power Spectral Density (PSD) function). By comparing the redistributed energy per frequency compared to the fundamental/carrier frequency one can estimate the optimal position by evaluating the magnitude of the shift in energy. By dividing the signal into a number of finite time windows, the FFT can be applied to a shorter signal to minimize spectral leakage and to enhance the extractable information of relevance. The PSD is typically then compared window per window and a largest shift in energy identifies the position of interest corresponding to a window. By moving the air deflector to a position which corresponds to an identified pulse with a center frequency with a largest deviation from a second threshold value the air deflector is placed in an optimal position.

A second way may be to analyze the signal using Fast Fourier Transforms in specific passbands or finite time windows around the carrier and fundamental frequencies of the electric actuator, tracking these frequencies using e.g. Harmonic Spectrum to determine momentary shifts due to disturbances and thereby subsequently deciding the optimum position of the deflector.

By analyzing the registered signal amplitudes simultaneously or successively both in the time domain and the frequency domain the robustness and reliability of the method may be increased.

The plurality of signal amplitudes which are registered for the sensed parameter vary with time when moving the air deflector from the first to the second position. Alternatively, the plurality of signal amplitudes which are registered for the sensed parameter vary with the positions (angular position, absolute position or relative position) between the first and second position.

Typically, the sweeping time for moving the air deflector between the first and second position is 5-200 seconds or 10-60 seconds.

The total number of positions of the air deflector between the first and second position for which signal amplitudes are registered may be 100-10000, or 100-5000, or 100-1000, or 100-500.

The present method may be automatically run, for example when a truck after a certain time period of stand-still starts again or when the load or trailer has been changed. Alternatively, a driver of a truck could start the optimizing method manually by pushing a button.

It is, hence, possible with the present method to, during driving of the vehicle, identify and position the air deflector for any trailer or load combination in an optimum position or close to optimum position, in which position the air drag is the lowest and, hence, also fuel consumption of the vehicle. No plurality of sensors is needed in the method. Nor is the method relying on the challenge of estimating physical quantities in a very exposed environment and to relate these to physical quantities in another system.

When performing the method above, it is possible to divide the registered signal amplitudes into N, e.g. 2-10000, 10-5000, or 20-1000 or 30-500, finite windows of consecutive signals. By dividing the signal into a number of finite time windows, the analysis can be applied to a shorter signal to enhance the extractable information relevant. The windows may be overlapping windows. This for example means that a first window may comprise signal amplitudes for the first 1-10 seconds of a sweep between the first and second position and a second window may comprise signal amplitudes for the time period 5-15 seconds. Alternatively, the first window may comprise signal amplitudes of the first 1-20 positions and the second window may comprise signal amplitudes of positions 10-30.

The electric actuator may be a reciprocating engine, an electro-mechanical actuator, an alternating current motor selected from a group comprising an induction motor, a synchronous, a sliding rotor motor and a repulsion motor, or a direct current motor selected from a group comprising a brushed motor and a brushless motor.

The sensed parameter may be selected from a group comprising current of the electric actuator, voltage of the electric actuator, rotations per minute of a rotor of a motor, motor switching frequency, position of a piston of a reciprocating engine, motor resistance, motor inductance and motor inertia.

The first and second threshold values respectively may exceed or fall below an estimated signal value for each registered signal amplitude with 5%, which estimated signal values are based on a set of the registered signal amplitudes.

As the threshold value is set to 5% above/below en estimated signal amplitude "normal noise" (often less than 3%) in the registered signal amplitudes will not be identified as the sought-after oscillation.

The signal trend estimation may be based on at least 20%, or at least 40% of the registered signal amplitudes.

Alternatively the registered signal amplitudes may be divided into N finite windows of consecutive registered signals and a signal trend estimation made for each window.

The signal trend estimation could be constructed using a linear trend estimation using e.g. least squares method.

The registered signal amplitudes used in the signal trend estimation may be evenly spread registered signal amplitudes corresponding to positions (angular positions, absolute positions, relative positions)/time points between the first and second position (or in a window).

In an alternative, the first and second threshold values respectively may exceed and fall below with 5% an average value, which average value may be obtained by dividing the registered signal amplitudes into N finite windows of consecutive signal amplitudes and for each window defining an average value of all registered signal amplitudes in the window.

There is then a first and second threshold value for each window in the time domain.

In yet an alternative, the first and second threshold values respectively may exceed and fall below with 5% a value obtained by dividing the registered signal amplitudes into N finite windows of consecutive signal amplitudes and for each window defining an average value of a maximum signal amplitude and a minimum signal amplitude within the window.

There is then a first and second threshold value for each window in the time domain.

The first and second threshold values respectively may exceed and fall below with 5% a value obtained by dividing the registered signal amplitudes into N finite windows of consecutive signal amplitudes and for each window defining an average value of a maximum signal amplitude and an average signal amplitude within the window.

There is then a first and second threshold value for each window in the time domain.

The number of windows may be 2-10000, 10-5000, 20-1000 or 30-500 and should preferably be more than 20.

The frequency value may be a frequency of rotation of the electric actuator +/- 2%, or +/- 5%, or +/- 10%, or +/- 20%, or +/- 30%.

The frequency value may be defined by an interval within which the frequency of rotation of the electric actuator typically varies while moving the air deflector between the first and second position. The rotation of the electric actuator will typically change with changing load conditions and a sudden disturbance will cause the actuator to momentarily shift in rotation. The interval may be estimated based on the variance of the frequency of rotation and could typically be defined as the fundamental frequency +/- 2%, or +/-5%, or +/- 10%, or +/- 20%, or +/- 30%.

The frequency value may alternatively be created by applying FFT to a so called demodulated current spectrum, where the fundamental frequency is removed from the spectrum to allow for repetitive signal variations to be analyzed. These repetitive signal variations will when separated from the fundamental frequency be easier to trend and analyze and the variations (the variance) will be extractable to allow for creating e.g. frequency values with which shifts in the fundamental frequency can be compared.

The method may comprise a step of in the frequency domain removing repetitive variance in the registered signal amplitudes.

The repetitive variance may have a frequency of a power supply device of the electric actuator.

The method may further comprise an additional step of ensuring that the identified position corresponds to an optimal position or close to an optimal position of the air deflector.

The additional step may comprise repeating steps a), b) and c1) until the positions corresponding to the identified registered signal amplitude peaks with the largest deviation from the first or second threshold value in steps c1) from two consecutive repetitions correspond, thereafter step d) is performed and the air deflector moved to the identified position.

The additional step may comprise repeating steps a), b) and c2) until the positions corresponding to the identified center frequencies of the pulses with the largest deviation from a the frequency value in steps c2) from two consecutive repetitions correspond, thereafter step d) is performed and the air deflector moved to the identified position.

The additional step may comprise continuously during the movement of the air deflector from the first to the second position registering values of an environmental parameter of the vehicle and/or air deflector and comparing corresponding registered signal amplitudes with registered values of the environmental parameter, wherein if the registered signal amplitude identified with the largest deviation from the first or second threshold value corresponds to an ambiguous value of the registered environmental parameter this largest deviation is disregarded as representative of the optimal position.

Instead the registered signal amplitude with the largest deviation from a first or second threshold value corresponding to an unambigous signal of the registered environmental parameter may be considered, and thereafter step d) is performed and the air deflector moved to the identified position.

The sensed environmental parameter may be a parameter corresponding to vertical acceleration of the vehicle during the movement of the air deflector from the first to the second position. If the registered signal amplitude identified with the largest deviation from a first or second threshold value corresponds to (for the same position or time point between the first and second position) an ambiguous registered value of the environmental parameter, i.e. a value which deviates with more than 10% from an average environmental value registered when moving the air deflector between the first and second position, the deviation is disregarded as representative of the sought position as the identified signal amplitude may not correspond to an optional position for the air deflector but be due to a disturbance, ambiguity, in the environmental parameter. The registered signal amplitude with the largest deviation from a first or second threshold value corresponding to an unambigous signal of the registered environmental parameter is instead considered as representative of the sought position. The ambiguous value of the sensed environmental parameter may e.g. be due to pot holes in the road, an uneven road surface etc.

The vertical acceleration may be measured by means of a vertical accelerometer, by a sensor measuring the air suspension of the vehicle or a sensor measuring the dampening of dampers located between the chassis and the cab.

The above described additional step may equally well take place in the frequency domain.

The additional step may alternatively comprise comparing the registered signal amplitudes with a library of stored signal amplitudes. Such a library may contain signal behavior due to disturbances and oscillations emanating from bumpy roads, wind gusts etc. and would be specific for each vehicle model. If an identified registered signal amplitude with a largest deviation from a first threshold value matches a signal in the library, the method steps a), b) and c1) are repeated until there is no match of an identified signal amplitude with largest deviation from a first or second threshold value. Thereafter the air deflector is moved to a position corresponding to the identified signal amplitude.

Alternatively, as the air deflector is moved from the first to the second position registered signal amplitudes may be continuously compared to the library and if there is a match with a signal in the library this registered signal amplitude will be left out from the preceding analysis of the registered signal amplitudes for finding a registered signal amplitude with a largest deviation from a first or second threshold value.

The above described additional steps may equally well take place in the frequency domain.

As one alternative, one of the steps c1) and c2) may be performed.

As another alternative, both step c1) and step c2) may be performed.

According to a second aspect there is provided an air guiding device for a ground automotive vehicle, comprising: an air deflector arranged for guiding an airflow around the vehicle during driving, an electric actuator arranged for moving the air deflector from a first to a second position when the vehicle is moving in a forward direction, a sensing device arranged for sensing a parameter of the electric actuator while the air deflector is moved from the first to the second position, and registering a plurality of signal amplitudes of the sensed parameter. A control unit arranged for a) in a time domain, identifying a portion of consecutive registered signal amplitudes, which portion is defined by two positive signal amplitude peaks at each end of the portion, which positive signal amplitude peaks exceed a first threshold value, and an intermediate negative signal amplitude peak between the two positive signal amplitude peaks, which negative signal amplitude peak falls below a second threshold value, and identifying a position corresponding to a signal amplitude peak within the identified portion with a largest deviation from the first or second threshold value, and instructing the actuator to move the air deflector to a position corresponding to the identified position, or b) in a frequency domain, identifying center frequencies of pulses corresponding to registered signal amplitudes, and identifying a position corresponding to an identified center frequency of a pulse with a largest deviation from a frequency value, and instructing the actuator to move the air deflector to a position corresponding to the identified position.

The air guiding device may comprise a filtering unit arranged for removing repetitive variance in the registered signal amplitudes.

### Brief Description of the Drawings

Figs 1a-c are schematic side views of a truck-trailer combination provided with an air deflector located on the roof of the truck cab.
Fig. 2a is a schematic side-view of a truck cab with an air deflector arranged on the truck cab roof.
Fig. 2b is a schematic top-view of a truck cab with a roof-mounted air deflector and air deflectors arranged on both lateral sides of the truck cab.
Fig. 3 is a graph showing a segment of consecutive registered signal amplitudes corresponding to a parameter of an electric actuator in the time domain when the air deflector is moved from a first to a second position.
Fig. 4 shows in the frequency domain a pulse corresponding to signal amplitudes in the graph in Fig. 3.
Fig. 5 illustrates schematically a block diagram of an air guiding device.
Fig. 6 illustrates schematically a block diagram of a method for optimizing a position of an air deflector guiding an airflow around a ground automotive vehicle during driving.

### Detailed Description

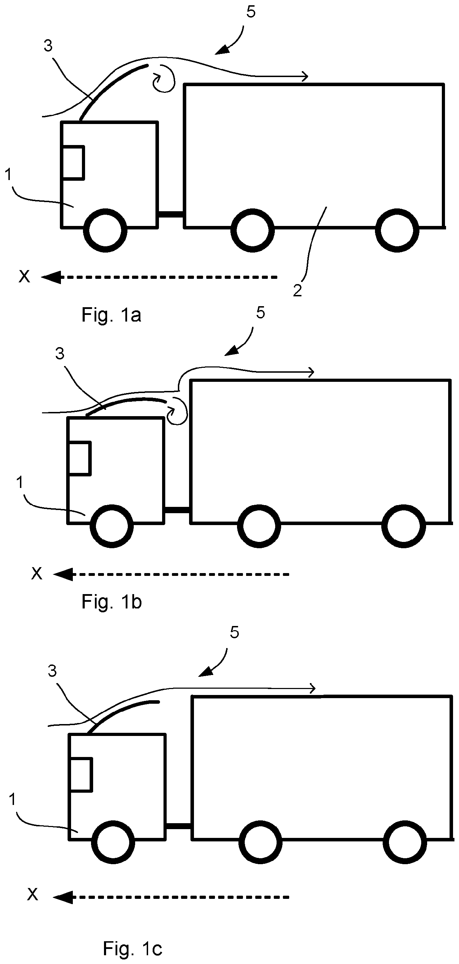

For an automotive ground vehicle such as a truck 1 carrying a load or towing a trailer 2, Figs 1a-1c, the front surface of extended parts of the load or trailer 2 will cause significant air drag during journey. Such air drag also occurs for example when a car tows a caravan.

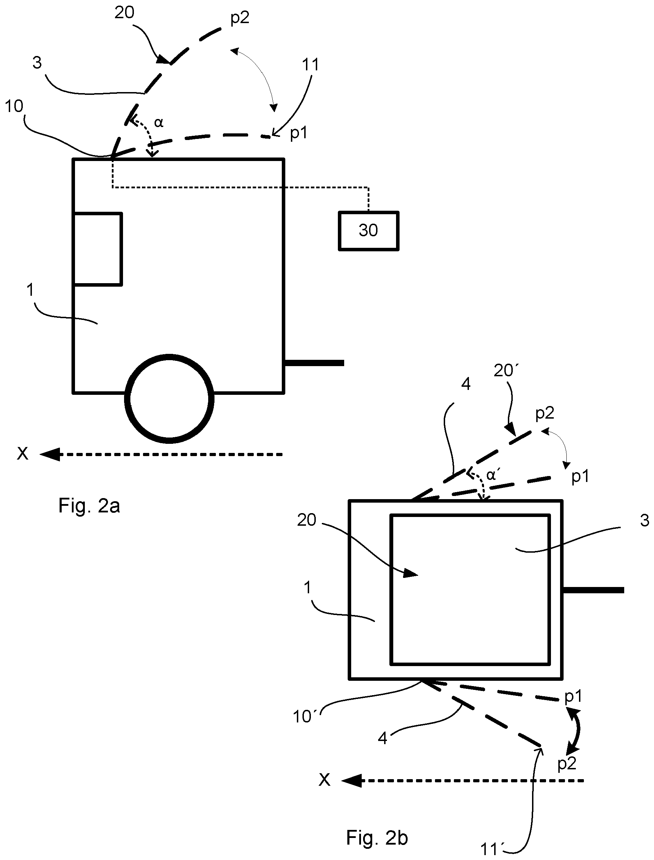

For reducing the air resistance of the vehicle and to reduce fuel consumption the truck cab 1 may be provided with a roof-mounted air deflector 3 (Figs 1a-1c and Fig. 2a) and/or side air deflectors 4 mounted on each lateral side of the truck cab 1 (Fig. 2b) for hiding the frontal face area of the trailer 2/load from an oncoming airflow and to get a more streamlined complete vehicle.

Factors that may affect the air resistance are mainly wind direction and wind speed in relation to the vehicle and geometrical factors, namely height and width of the driver's cab 1 relative to the height and width of the trailer 2/load as well as the distance between truck 1 and trailer 2.

The air deflector 3, 4, comprises a major essentially planar air-deflecting surface 20, 20', which has a first edge 10, 10' and a second edge 11, 11' essentially opposite the first edge 10, 10' across the major air-deflecting surface 20, 20'. When arranged on the truck cab 1, Figs 1a-1c and Figs 2a and 2b, the air deflector 3, 4 is arranged to be pivotable around its first edge 10, 10' to form an angle of inclination α, α' of the air-deflecting surface 10, 10' to a direction X parallel with the normal forward direction of the moving vehicle. When the angle of inclination α, α' is changed the second edge 11, 11' is correspondingly translated from one position to another position.

The air deflector 3, 4 may have a first extreme position in which the angle of inclination α, α' is low and a second extreme position in which the angle of inclination α, α' is high.

For a side-mounted air deflector 4, see Fig. 2b, the second edge 11' is pivoted around the first edge 10' forwards and inwards relative to the side of the vehicle forming an angle α' relative to the longitudinal axis X.

For a roof-mounted air deflector 3, see Fig. 2a, the second edge 11 is pivoted around the first edge 10 upwards and downwards relative to the roof of the truck cab forming an angle α relative to the longitudinal axis X.

The air deflector 3, 4 may be mounted by means of a frame (not shown) to the truck cab 1 and the air deflector 3, 4 may be moveable with respect to the frame.

The vehicle, when travelling, will be subject to load from the air, where the load from the air depends on the angle of inclination α, α' of the air-deflecting surface 20, 20' and on the condition of the air deflector 3, 4 relative to the load/trailer. Load due to air that flows against the air-deflecting surface 20, 20' of the air deflector 3, 4 increases as the angle relative to the direction X increases.

In Fig. 1a the roof-mounted air deflector 3 is adjusted to a condition such that the second end 11 of the roof-mounted air deflector 3 is positioned significantly above the height of the trailer 2. The air flowing 5 off the second edge 11 of the air deflector 3 may create a separate flow in an opposite direction in a cavity between the air deflector 3 and the truck cab 1, and thus increase the pressure in the cavity and the air drag on the vehicle as compared to an optimally positioned air deflector (see Fig. 1c).

In Fig. 1b the second edge 11 of the air deflector 3 is instead in a position lower than the height of the forward end of the trailer. This part of the trailer will produce a stagnation of a part of the flow 5. The stagnation of the flow may force an increased air quantity into the cavity and thus create an increased pressure in the cavity and the air drag on the vehicle as compared to an optimally positioned air deflector (see Fig. 1c).

In Fig. 1c the second end 11 of the air deflector 3 is positioned at the same or approximately the same level as the height of the trailer 2. The air then may flow smoothly over the air guide and further above the roof of the trailer 2. In this optimal position the airflow 5 is guided around the vehicle during driving, i.e. the air deflector 3 redirects the air which is moving over the moving vehicle in such a way that the air does not hit the front edge of the trailer 2 but instead the air is moving over the roof of the trailer 3.

The same effects are seen for a truck carrying a load having a height extending over the height of the truck cab. If the load or towed trailer 2 extends laterally outwards of the truck cab 1 the optimal position of the air deflectors is when the second end 11' of the air deflector 4 is positioned at the same or approximately the same level as the width of the trailer 2 or load.

Even small angular variations in the settings of the deflectors 3, 4 may have significant effect on the total vehicle air resistance.

The dimensions of trailers and of load carried by a vehicle often vary, why for optimal reduction of the air drag, the air deflector(s) 3, 4 should be adjustable.

Traditionally, air deflectors 3, 4 have been manually adjustable. It is, however, desirable to, automatically, during driving of the vehicle, be able to identify and position the air deflector 3, 4 for any truck-trailer or truck-load combination in an optimum position or close to optimum position, in which position the air drag is the lowest.

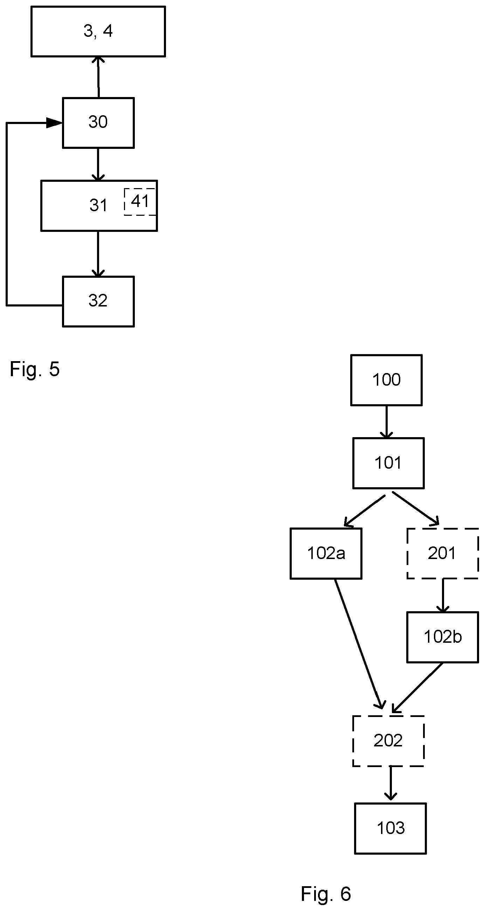

Below follows a description of a method (schematically described in Fig. 6) for optimizing a position of an air deflector 3, 4 guiding an airflow around a vehicle during driving. An air guiding device is schematically shown in Fig. 5.

The method may be automatically run, for example when a vehicle after a certain time period of stand-still starts again, when the load or trailer 2 has been changed and/or when the vehicle reaches a certain speed (such as for example 20km/h). Alternatively, a driver of a truck could start the optimizing method manually by pushing a button.

The air deflector 3, 4 is moved, "swept", from a first p1, p1' to a second position p2, p2' when the vehicle is moving in a forward direction 100. Here, the first position is the position with the smallest angle of inclination α, α' of the air-deflecting surface 20, 20'of the air deflector 3, 4 to a direction X parallel with the normal forward direction and the second position a position of largest angle of inclination α, α'.

It is to be understood that the first position equally well may be the position with the largest angle of inclination and the second position the position with the smallest angle of inclination and the air deflector 3, 4 being swept from the point with the highest angle of inclination to the point with the lowest angle of inclination.

The air deflector 3, 4 may be moved from the first p1, p1' to the second position p2, p2' by means of an electric actuator 30. The electric actuator 30 may a reciprocating engine, an electro-mechanical actuator, an alternating current motor selected from a group comprising an induction motor, a synchronous motor, a sliding rotor motor and a repulsion motor, or a direct current motor selected from a group comprising a brushed motor and a brushless motor.

A sensing device 31 may be arranged for sensing a parameter of the electric actuator 30 for moving the deflector 3, 4 from the first to the second position and for registering a plurality of signal amplitudes of the sensed parameter 101. The sensed parameter may be current of the electric actuator, voltage of the electric actuator, rotations per minute of a rotor of a motor, motor switching frequency, position of a piston of a reciprocating engine, motor resistance, motor inductance and motor inertia.

Before starting the method it is possible to make a pre-sweep with the air deflector 3, 4 between the two outermost positions of the air deflector identifying a portion of the positions in which it is likely that the most interesting information in the signal amplitudes corresponding to the sensed parameter is to be found. The first and second positions p1, p2 are then set as the end points of this portion.

The first position p1 may be obtained by moving the air deflector 3, 4 in a direction from a first outermost position towards a second outermost position an angle of 2-5% of a total angle between the first and second outermost positions of the air deflector 3, 4 and the second position may be obtained by moving the air deflector 3, 4 from the first outermost position towards the second outermost position an angle of 95-98% of the total angle between the first and second outermost positions.

The angle between the outermost positions may be 10-80°.

Alternatively, the first position p1 may be obtained by moving the air deflector 3, 4 in a direction from a first outermost position towards a second outermost position for a time period of 2-5% of a total time for moving the air deflector between the first and second outermost positions, and the second position p2 may be obtained by moving the air deflector 3, 4 from the first outermost position towards the second outermost position for a time period of 95-98% of the total time for moving the air deflector 3, 4 between the first and second outermost positions.

The total time for moving the air deflector 3, 4 between the outermost positions may be 5-300 seconds

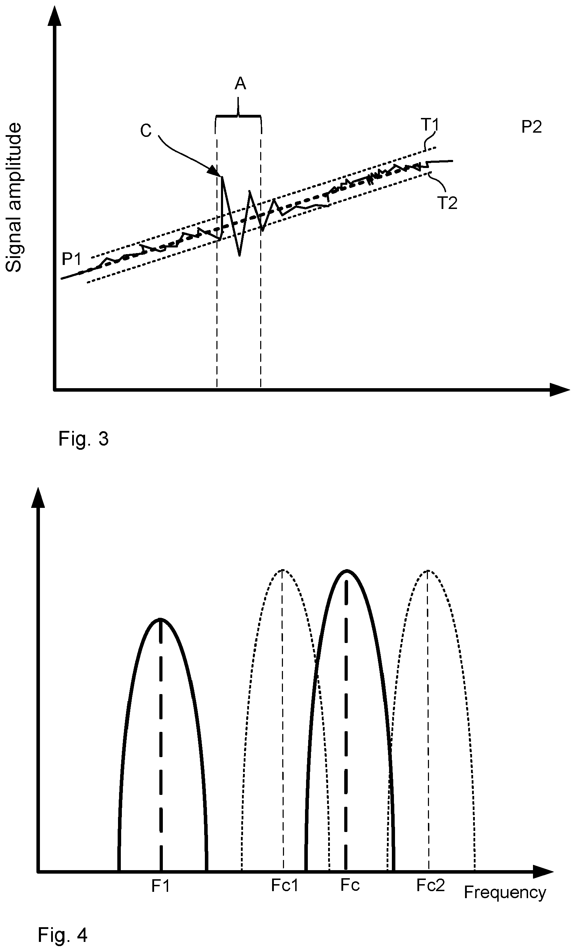

In the graph in Fig. 3 a segment of consecutive registered signal amplitudes corresponding to the sensed parameter as the air deflector 3, 4 is moved from the first p1 to the second position p2 are shown in the time domain as a continuous line. The plurality of signal amplitudes which are registered by the sensing device 31 for the sensed parameter may vary with time moving the air deflector 3, 4 from the first p1 to the second position p2. Alternatively, the plurality of signal amplitudes which are registered for the sensed parameter may vary with the positions (angular positions, absolute positions, relative positions) between the first p1 and second position p2. The signal disturbance, oscillation with enlarged amplitude, seen in the graph being caused by a perturbation of the air deflector 3, 4.

When the air deflector 3, 4 is moved from the first p1 to the second p2 position by means of the electric actuator 3, 4 the sensed parameter is influenced by both external and internal factors such as air loads exerted on the air deflector 3, 4, internal friction, properties of the air deflector itself, such as weight, and other internal/external disturbances. The sum of these typically increases as the second edge 11, 11' of the air-deflector 3, 4 is elevated towards it highest position (the air deflector 3, 4 being rotated around its first edge 10, 10', as is seen in the graph in Fig. 3.).

When the air deflector 3, 4 during the sweep from the first p1 to the second p2 position reaches and passes the optimal position, i.e. the position in which the air drag is the lowest and, hence, also the fuel consumption of the vehicle, the dampening effects of the air on the air deflector 3, 4 momentarily changes. There is a shift in character of the air load on the air deflector 3, 4. This opens for a change in character in the external disturbances on the air deflector 3, 4 and is, hence, something that will momentarily affect the electric actuator 30 and be seen in the sensed parameter and the corresponding registered signal amplitudes in the time domain, see Fig. 3, and in the frequency domain, see Fig. 4.

Not only the change in character of the air loads will be visible in the sensed parameter and the corresponding registered signal amplitudes, but when the dampening is changed and external disturbance perturbs the air deflector 3, 4 and the electric actuator 30 this change will too be visible in the sensed parameter and the registered signal amplitudes with a dampening different from disturbances outside the optimal position. This is seen as a discrepancy (discontinuity) in the registered signal amplitudes when the optimum position of the air deflector is reached. Immediately adjacent the optimum position the discrepancy of the registered signal amplitudes is noticeably lower, see, Fig. 3.

In the time domain, a portion A of consecutive registered signal amplitudes is identified 102a by means of a control unit 32. The portion A is defined by two positive signal amplitude peaks at each end of the portion, which positive signal amplitude peaks exceed a first threshold value, and an intermediate negative signal amplitude peak between the two positive signal amplitude peaks, which negative signal amplitude peak falls below a second threshold value. A position corresponding to a signal amplitude peak C within the identified portion A with a largest deviation from the first or second threshold value is identified and the control unit 32 instructs the electric actuator 30 to move the air deflector 3, 4 to this position 103. This position then corresponds to an optimal or close to optimal position of the air deflector 3,4.

The first and second threshold values respectively may exceed or fall below an estimated signal value for each registered signal amplitude with 5%, which estimated signal values are based on a set of the registered signal amplitudes. In Fig. 3 such first T1 and second T2 threshold values are illustrated. As the threshold value is set to 5% above/below an estimated signal amplitude "normal noise" (often less than 3%) in the registered signal amplitudes will not be identified as the sought-after oscillation.

The signal trend estimation may be based on at least 20%, or at least 40% of the registered signal amplitudes.

Alternatively the registered signal amplitudes may be divided into N finite windows of consecutive registered signals and a signal trend estimation made for each window.

The trend estimation could be constructed using a linear trend estimation using e.g. least squares method.

The registered signal amplitudes used in the signal trend estimation may be evenly spread registered signal amplitudes corresponding to positions (angular positions, absolute positions, relative positions)/time points between the first and second position (or in a window).

In an alternative, the first and second threshold values respectively may exceed and fall below with 5% an average value, which average value may be obtained by dividing the registered signal amplitudes into N finite windows of consecutive signal amplitudes and for each window defining an average value of all registered signal amplitudes in the window.

There is then a first and second threshold value for each window in the time domain.

In yet an alternative, the first and second threshold values respectively may exceed and fall below with 5% a value obtained by dividing the registered signal amplitudes into N finite windows of consecutive signal amplitudes and for each window defining an average value of a maximum signal amplitude and a minimum signal amplitude within the window.

There is then a first and second threshold value for each window in the time domain.

The first and second threshold values respectively may exceed and fall below with 5% a value obtained by dividing the registered signal amplitudes into N finite windows of consecutive signal amplitudes and for each window defining an average value of a maximum signal amplitude and an average signal amplitude within the window.

There is then a first and second threshold value for each window in the time domain.

The number of windows may be 2-10000, 10-5000, 20-1000 or 30-500 and should preferably be more than 20.

Alternatively, in a frequency domain, see Fig. 4, center frequencies F1 of pulses corresponding to registered signal amplitudes are identified by the control unit 32, and a position corresponding to an identified center frequency F1 of a pulse with a largest deviation from a frequency value is identified 102b. Thereafter, the control unit 32 instructs the electric actuator 30 to move the air deflector 3, 4 to the identified position 103. This position corresponds to the sought optimal position or a position close to the optimal position for the air deflector 3, 4.

The frequency value may be a frequency of rotation Fc of the electric actuator +/- 2%, or +/- 5%, or +/- 10%, or +/- 20%, or +/- 30%.

The frequency value may be defined by an interval Fc1-Fc2 within which the frequency of rotation Fc of the electric actuator 30 typically varies while moving the air deflector 3, 4 between the first p1 and second p2 position, see Fig. 4. The rotation of the electric actuator 30 will typically change with changing load conditions and a sudden disturbance will cause the actuator 30 to momentarily shift in rotation. The interval may be estimated based on the variance of the frequency of rotation and could typically be defined as the fundamental frequency +/- 2%, or +/- 5%, or +/- 10%, or +/-20%, or +/- 30%.

The frequency value may alternatively be created by applying FFT to a so called demodulated current spectrum, where the fundamental frequency is removed from the spectrum to allow for repetitive signal variations to be analyzed. These repetitive signal variations will when separated from the fundamental frequency be easier to trend and analyze and the variations (the variance) will be extractable to allow for creating e.g. frequency values with which shifts in the fundamental frequency can be compared.

The electric actuator 30 will rotate with a fundamental/carrier Fc frequency. When the air deflector 3, 4 is exposed to a disturbance, the frequency of rotation will momentarily change. By evaluating the registered signal amplitudes and frequencies in the frequency domain, one will therefore be able to detect a momentarily shift in the fundamental frequency (rotation of the electric actuator) and correlate this change in frequency to the disturbance that the air deflector 3, 4 is exposed to. This disturbance is in the optimal position typically due to two factors. The air deflector 3, 4, the carrying construction (not shown) and electric actuator 30 will act as something similar to a spring-damper system. And when the optimal position is passed, due to the fact that the turbulence in the air flow will shift in character, a distinct disturbance will be induced when the vortices change direction over the air deflector 3, 4. This disturbance will decelerate or accelerate the electric actuator momentarily, which will be seen as a shift in the fundamental/carrier frequency of the electric actuator 30. Secondly, in the optimum position, due to the smoother airflow, disturbances on the air deflector 3, 4 will be amplified as the airflow is now in a sort of a temporary equilibrium. If the deflector 3, 4 is lower, this equilibrium changes as it does if the deflector 3, 4 is slightly higher. So around the optimal position, there will be oscillations that are amplified compared to oscillations at other positions of the air deflector 3, 4.

These oscillations are then detected by applying a frequency analysis to evaluate the energy distribution per frequency. By comparing the redistributed energy per frequency compared to the fundamental/carrier frequency one can conclude where the optimal position is by evaluating the magnitude of the shift in power.

Alternatively, both the time domain analysis 102a and the frequency domain analysis 102b are simultaneously or successively performed and the air deflector 3, 4 moved to a position corresponding to an identified position.

By analyzing the registered signal amplitudes both in the time domain and the frequency domain the robustness and reliability of the method is increased.

The method may comprise a step of in the frequency domain of removing repetitive variance in the registered signal amplitudes 201 by means of a filtering unit 41.

The repetitive variance may have a frequency of a power supply device of the electric actuator 30.

The method may further comprise an additional step 202 of ensuring that the identified position corresponds to an optimal position or close to an optimal position of the air deflector 3, 4.

The additional 202 step may comprise repeating steps 100, 101 and 102a of the method, see Fig. 6, until the positions corresponding to the identified registered signal amplitude peaks with the largest deviation from the first or second threshold value in steps 102a from two consecutive repetitions correspond, thereafter the air deflector 3, 4 is moved to the identified position 103.

The additional step 202 may comprise repeating steps 100, 101 and 102b of the method, see Fig 6, until the positions corresponding to the identified center frequencies of the pulses with the largest deviation from the frequency value in steps 102b from two consecutive repetitions correspond, thereafter the air deflector is moved to the identified position 103.

The additional step 202 may comprise continuously during the movement of the air deflector 3, 4 from the first p1 to the second p2 position registering values of an environmental parameter of the vehicle and/or air deflector 3, 4 and comparing corresponding registered signal amplitudes with registered values of the environmental parameter, wherein if the registered signal amplitude identified with the largest deviation from the first or second threshold value corresponds to an ambiguous value of the registered environmental parameter this largest deviation is disregarded as representative of the optimal position.

Instead the registered signal amplitude with the largest deviation from the first or second threshold value corresponding to an unambigous signal of the registered environmental parameter may be considered, and thereafter the air deflector moved to the identified position 103.

The sensed environmental parameter may be a parameter corresponding to vertical acceleration of the vehicle during the movement of the air deflector 3, 4 from the first p1 to the second position p2. If the registered signal amplitude identified with the largest deviation from a first or second threshold value corresponds to (for the same position or time point between the first and second position) an ambiguous registered value of the environmental parameter, i.e. a value which deviates with more than 10% from an average environmental value registered when moving the air deflector 3, 4 between the first p1 and second p2 position, the deviation is disregarded as representative of the sought position as the identified signal amplitude may not correspond to an optional position for the air deflector 3, 4 but be due to a disturbance, ambiguity, in the environmental parameter. The registered signal amplitude with the largest deviation from a first or second threshold value corresponding to an unambiguous signal of the registered environmental parameter is instead considered as representative of the sought position. The ambiguous value of the sensed environmental parameter may e.g. be due to pot holes in the road, an uneven road surface etc.

The vertical acceleration may be measured by means of a vertical accelerometer, by a sensor measuring the air suspension of the vehicle or a sensor measuring the dampening of dampers located between the chassis and the cab.

The above described additional step 202 may equally well take place in the frequency domain.

The additional step 202 may alternatively comprise comparing the registered signal amplitudes with a library of stored signal amplitudes. Such a library may contain signal behavior due to disturbances and oscillations emanating from bumpy roads, wind gusts etc., and would be specific for each vehicle. If an identified registered signal amplitude with a largest deviation from a first or second threshold value matches a signal in the library, the method steps 100, 101 and 102 are repeated until there is no match of an identified signal amplitude with largest deviation from a first or second threshold value. Thereafter the air deflector is moved to a position corresponding to the identified signal amplitude 103.

Alternatively, as the air deflector is moved from the first to the second position registered signal amplitudes may continuously be compared to the library and if there is a match with a signal in the library this registered signal amplitude will be left out from the preceding analysis of the registered signal amplitudes for finding a registered signal amplitude with a largest deviation from a first or second threshold value.

The above described additional steps may equally well take place in the frequency domain.

It is, hence, possible with the present method to, during driving of the vehicle, identify and position the air deflector 3, 4 for any trailer or load combination in an optimum position or close to optimum position, in which position the air drag is the lowest and, hence, also fuel consumption of the vehicle.

## Claims

1. Method for optimizing a position of an air deflector (3, 4) guiding an airflow around a ground automotive vehicle during driving, comprising the steps of:
a) moving the air deflector (3, 4) by means of an electric actuator (30) from a first (p1) to a second position (p2) when the vehicle is moving in a forward direction (100),
b) sensing a parameter of the electric actuator (30) for moving the air deflector (3, 4) from the first to the second position (p1; p2), and registering a plurality of signal amplitudes of the sensed parameter (101),
c1) in a time domain, identifying a portion of consecutive registered signal amplitudes, which portion is defined by two positive signal amplitude peaks at each end of the portion, which positive signal amplitude peaks exceed a first threshold value, and an intermediate negative signal amplitude peak between the two positive signal amplitude peaks, which negative signal amplitude peak falls below a second threshold value, and identifying a position corresponding to a signal amplitude peak within the identified portion with a largest deviation from the first or second threshold value (102a),
and/or
c2) in a frequency domain, identifying center frequencies of pulses corresponding to registered signal amplitudes, and identifying a position corresponding to an identified center frequency of a pulse with a largest deviation from a frequency value (102b), and
d) moving the air deflector (3, 4) to the identified position (103).

2. The method of claim 1, wherein the electric actuator (30) is a reciprocating engine, an electro-mechanical actuator, an alternating current motor selected from a group comprising an induction motor, a synchronous motor, a sliding rotor motor and a repulsion motor, or a direct current motor selected from a group comprising a brushed motor and a brushless motor,
preferably, the sensed parameter is selected from a group comprising current of the electric actuator, voltage of the electric actuator, rotations per minute of a rotor of a motor, motor switching frequency, position of a piston of a reciprocating engine, motor resistance, motor inductance and motor inertia.

3. The method of any one of claims 1-2, wherein step c1) is performed, and wherein the first and second threshold values respectively exceed and fall below an estimated signal value for each registered signal amplitude with 5%, which estimated signal values are based on a set of the registered signal amplitudes.

4. The method of any one of claims 1-2, wherein step c1) is performed, and wherein the first and second threshold values respectively exceed and fall below with 5% an average value, which average value is obtained by dividing the registered signal amplitudes into N finite windows of consecutive signal amplitudes and for each window defining an average value of all registered signal amplitudes in the window.

5. The method of any one of claims 1-2, wherein step c1) is performed, and wherein the first and second threshold values respectively exceed and fall below with 5% a value obtained by dividing the registered signal amplitudes into N finite windows of consecutive signal amplitudes and for each window defining an average value of a maximum signal amplitude and a minimum signal amplitude within the window.

6. The method of any one of claims 1-2, wherein step c1) is performed, and wherein the first and second threshold values respectively exceed and fall below with 5% a value obtained by dividing the registered signal amplitudes into N finite windows of consecutive signal amplitudes and for each window defining an average value of a maximum signal amplitude and an average signal amplitude within the window.

7. The method of any one of claims 1-6, wherein step c2) is performed, and wherein the frequency value is a frequency of rotation of the electric actuator +/- 2%, or +/- 5%, or +/- 10%, or +/- 20%, or +/- 30%.

8. The method of any one of claims 1-7, further comprising a step of removing repetitive variance in the registered signal amplitudes (201),
preferably, the repetitive variance has a frequency of a power supply device of the electric actuator (30).

9. The method of any one of claims 1-8, wherein the method comprises an additional step (202) of ensuring that the identified position corresponds to an optimal position or close to an optimal position of the air deflector (3, 4).

10. The method of claim 9, wherein the additional step (202) comprises repeating steps a), b) and c1) until the positions corresponding to the identified registered signal amplitude peaks with the largest deviation from the first or second threshold value in steps c1) from two consecutive repetitions correspond, thereafter step d) is performed and the air deflector (3, 4) moved to the identified position (103).

11. The method of claim 9, wherein the additional step (202) comprises repeating steps a), b) and c2) until the positions corresponding to the identified center frequencies of the pulses with the largest deviation from the frequency value in steps c2) from two consecutive repetitions correspond, thereafter step d) is performed and the air deflector (3, 4) moved to the identified position (103).

12. The method of claim 9, wherein step c1) is performed, and wherein the additional step (202) comprises continuously during the movement of the air deflector (3, 4) from the first to the second position registering values of an environmental parameter of the vehicle and/or air deflector (3, 4) and comparing registered signal amplitudes with corresponding registered values of the environmental parameter, wherein if the registered signal amplitude peak identified with the largest deviation from the first or second threshold value corresponds to an ambiguous value of the registered environmental parameter this signal amplitude peak is disregarded as representative of the optimal position.

13. The method of any one of the preceding claims, wherein only one of the steps c1) and c2) is performed,
or
both step c1) and step c2) are performed.

14. An air guiding device for a ground automotive vehicle, comprising:
- an air deflector (3, 4) arranged for guiding an airflow around the vehicle during driving, and
- an electric actuator (30) arranged for moving the air deflector (3, 4) from a first (p1) to a second position (p2) when the vehicle is moving in a forward direction.
the air guiding device being **characterised in that** it further comprises:
- a sensing device (31) arranged for sensing a parameter of the electric actuator (30) while the air deflector (3, 4) is moved from the first to the second position (p1; p2), and registering a plurality of signal amplitudes of the sensed parameter,
- a control unit (32) arranged for:
- a) in a time domain, identifying a portion of consecutive registered signal amplitudes, which portion is defined by two positive signal amplitude peaks at each end of the portion, which positive signal amplitude peaks exceed a first threshold value, and an intermediate negative signal amplitude peak between the two positive signal amplitude peaks, which negative signal amplitude peak falls below a second threshold value, and identifying a position corresponding to a signal amplitude peak within the identified portion with a largest deviation from the first or second threshold value, and instructing the actuator (30) to move the air deflector (3, 4) to a position corresponding to the identified position, or
- b) in a frequency domain, identifying center frequencies of pulses corresponding to registered signal amplitudes, and identifying a position corresponding to an identified center frequency of a pulse with a largest deviation from a frequency value, and instructing the actuator (30) to move the air deflector (3, 4) to a position corresponding to the identified position.

15. The air guiding device of claim 14, further comprising a filtering unit (41) arranged for removing repetitive variance in the registered signal amplitudes.

## Patentansprüche

1. Verfahren zur Optimierung einer Stellung eines Windabweisers (3, 4), der einen Luftstrom um ein landgestütztes Kraftfahrzeug leitet, während dieses fährt, das folgende Schritte umfasst:
a) Bewegen des Windabweisers (3, 4) mittels eines elektrischen Aktuators (30) aus einer ersten (p1) in eine zweite Stellung (p2), wenn das Fahrzeug sich in einer Vorwärtsrichtung (100) bewegt,
b) Erfassen eines Parameters des elektrischen Aktuators (30) zum Bewegen des Windabweisers (3, 4) aus der ersten in die zweite Stellung (p1; p2) und Aufzeichnen mehrerer Signalamplituden des erfassten Parameters (101),
c1) in einer Zeitdomäne: Ermitteln eines Abschnitts aufeinanderfolgender aufgezeichneter Signalamplituden, wobei dieser Abschnitt durch zwei positive Signalamplitudenspitzen an jedem Ende des Abschnitts, wobei diese positiven Signalamplitudenspitzen einen ersten Schwellenwert überschreiten, und eine dazwischenliegende negative Signalamplitudenspitze zwischen den zwei positiven Signalamplitudenspitzen, wobei diese negative Signalamplitudenspitze einen zweiten Schwellenwert unterschreitet, definiert ist, und Ermitteln einer Stellung, die einer Signalamplitudenspitze innerhalb des ermittelten Abschnitts mit einer größten Abweichung von dem ersten oder zweiten Schwellenwert (102a) entspricht,
und/oder
c2) in einer Frequenzdomäne: Ermitteln von Mittenfrequenzen von Impulsen, die aufgezeichneten Signalamplituden entsprechen, und Ermitteln einer Stellung, die einer ermittelten Mittenfrequenz eines Impulses mit einer größten Abweichung von einem Frequenzwert (102b) entspricht, und
d) Bewegen des Windabweisers (3, 4) in die ermittelte Stellung (103).

2. Verfahren nach Anspruch 1, wobei der elektrische Aktuator (30) ein Hubkolbenmotor, ein elektromechanischer Aktuator, ein Wechselstrommotor, ausgewählt aus einer Gruppe, die einen Induktionsmotor, einen Synchronmotor, einen Verschiebeankermotor und einen Repulsionsmotor umfasst, oder ein Gleichstrommotor, ausgewählt aus einer Gruppe, die einen Bürstenmotor und einen bürstenlosen Motor umfasst, ist,
wobei der erfasste Parameter vorzugsweise aus einer Gruppe ausgewählt ist, die einen Strom des elektrischen Aktuators, eine Spannung des elektrischen Aktuators, Umdrehungen pro Minute eines Ankers eines Motors, eine Motorschaltfrequenz, eine Position eines Kolbens eines Hubkolbenmotors, einen Motorwiderstand, eine Motorinduktivität und eine Motorträgheit umfasst.

3. Verfahren nach einem der Ansprüche 1 - 2, wobei Schritt c1) durchgeführt wird und wobei der erste und zweite Schwellenwert einen geschätzten Signalwert für jede aufgezeichnete Signalamplitude mit 5 % entsprechend überschreiten und unterschreiten, wobei diese geschätzten Signalwerte auf einem Satz der aufgezeichneten Signalamplituden basieren.

4. Verfahren nach einem der Ansprüche 1 - 2, wobei Schritt c1) durchgeführt wird und wobei der erste und zweite Schwellenwert mit 5 % einen Durchschnittswert entsprechend überschreiten und unterschreiten, wobei dieser Durchschnittswert durch Teilen der aufgezeichneten Signalamplituden in N finite Fenster aufeinanderfolgender Signalamplituden und Definieren eines Durchschnittswerts aller aufgezeichneten Signalamplituden in dem Fenster für jedes Fenster erhalten wird.

5. Verfahren nach einem der Ansprüche 1 - 2, wobei Schritt c1) durchgeführt wird und wobei der erste und zweite Schwellenwert mit 5 % einen Wert entsprechend überschreiten und unterschreiten, der durch Teilen der aufgezeichneten Signalamplituden in N finite Fenster aufeinanderfolgender Signalamplituden und Definieren eines Durchschnittswerts einer größten Signalamplitude und einer kleinsten Signalamplitude innerhalb des Fensters für jedes Fenster erhalten wird.

6. Verfahren nach einem der Ansprüche 1 - 2, wobei Schritt c1) durchgeführt wird und wobei der erste und zweite Schwellenwert mit 5 % einen Wert entsprechend überschreiten und unterschreiten, der durch Teilen der aufgezeichneten Signalamplituden in N finite Fenster aufeinanderfolgender Signalamplituden und Definieren eines Durchschnittswerts einer größten Signalamplitude und einer durchschnittlichen Signalamplitude innerhalb des Fensters für jedes Fenster erhalten wird.

7. Verfahren nach einem der Ansprüche 1 - 6, wobei Schritt c2) durchgeführt wird und wobei der Frequenzwert eine Umdrehungsfrequenz des elektrischen Aktuators +/- 2 % oder +/- 5 % oder +/- 10 % oder +/- 20 % oder +/- 30 % ist.

8. Verfahren nach einem der Ansprüche 1 - 7, das ferner einen Schritt eines Eliminierens repetitiver Varianz in den aufgezeichneten Signalamplituden (201) umfasst,
wobei die repetitive Varianz vorzugsweise eine Frequenz einer Stromversorgungsvorrichtung des elektrischen Aktuators (30) aufweist.

9. Verfahren nach einem der Ansprüche 1 - 8, wobei das Verfahren einen zusätzlichen Schritt (202) eines Gewährleistens, dass die ermittelte Stellung einer optimalen Stellung entspricht oder einer optimalen Stellung des Windabweisers (3, 4) nahekommt, umfasst.

10. Verfahren nach Anspruch 9, wobei der zusätzliche Schritt (202) ein Wiederholen der Schritte a), b) und c1) umfasst, bis die Stellungen, die den ermittelten aufgezeichneten Signalamplitudenspitzen mit der größten Abweichung von dem ersten oder zweiten Schwellenwert in Schritt c1) aus zwei aufeinanderfolgenden Wiederholungen entsprechen, einander entsprechen, und danach Schritt d) durchgeführt und der Windabweiser (3, 4) in die ermittelte Stellung (103) bewegt wird.

11. Verfahren nach Anspruch 9, wobei der zusätzliche Schritt (202) ein Wiederholen der Schritte a), b) und c2) umfasst, bis die Stellungen, die den ermittelten Mittenfrequenzen der Impulse mit der größten Abweichung von dem Frequenzwert in Schritt c2) aus zwei aufeinanderfolgenden Wiederholungen entsprechen, einander entsprechen, und danach Schritt d) durchgeführt und der Windabweiser (3, 4) in die ermittelte Stellung (103) bewegt wird.

12. Verfahren nach Anspruch 9, wobei Schritt c1) durchgeführt wird und wobei der zusätzliche Schritt (202) kontinuierlich, während der Bewegung des Windabweisers (3, 4) aus der ersten in die zweite Stellung, ein Aufzeichnen von Werten eines Umfeldparameters des Fahrzeugs und/oder des Windabweisers (3, 4) und Vergleichen aufgezeichneter Signalamplituden mit entsprechenden aufgezeichneten Werten des Umfeldparameters umfasst, wobei, wenn die aufgezeichnete Signalamplitudenspitze, die mit der größten Abweichung von dem ersten oder zweiten Schwellenwert ermittelt wird, einem uneindeutigen Wert des aufgezeichneten Umfeldparameters entspricht, diese Signalamplitudenspitze als für die optimale Stellung repräsentativ nicht berücksichtigt wird.

13. Verfahren nach einem der vorhergehenden Ansprüche, wobei nur einer der Schritte c1) und c2) durchgeführt wird
oder
sowohl Schritt c1) als auch Schritt c2) durchgeführt wird.

14. Luftleitvorrichtung für ein landgestütztes Kraftfahrzeug, umfassend:
- einen Windabweiser (3, 4), der zum Leiten eines Luftstroms um das Fahrzeug während des Fahrens angeordnet ist, und
- einen elektrischen Aktuator (30), der zum Bewegen des Windabweisers (3, 4) aus einer ersten (p1) in eine zweite Stellung (p2), wenn das Fahrzeug sich in einer Vorwärtsrichtung bewegt, angeordnet ist,
wobei die Luftleitvorrichtung **dadurch gekennzeichnet ist, dass** sie ferner umfasst:
- eine Erfassungsvorrichtung (31), die zum Erfassen eines Parameters des elektrischen Aktuators (30), während der Windabweiser (3, 4) aus der ersten in die zweite Stellung (p1; p2) bewegt wird, und Aufzeichnen mehrerer Signalamplituden des erfassten Parameters angeordnet ist,
- eine Steuereinheit (32), die für Folgendes angeordnet ist:
- a) in einer Zeitdomäne: Ermitteln eines Abschnitts aufeinanderfolgender aufgezeichneter Signalamplituden, wobei dieser Abschnitt durch zwei positive Signalamplitudenspitzen an jedem Ende des Abschnitts, wobei diese positiven Signalamplitudenspitzen einen ersten Schwellenwert überschreiten, und eine dazwischenliegende negative Signalamplitudenspitze zwischen den zwei positiven Signalamplitudenspitzen, wobei diese negative Signalamplitudenspitze einen zweiten Schwellenwert unterschreitet, definiert ist, und Ermitteln einer Stellung, die einer Signalamplitudenspitze innerhalb des ermittelten Abschnitts mit einer größten Abweichung von dem ersten oder zweiten Schwellenwert entspricht, und Anweisen des Aktuators (30), den Windabweiser (3, 4) in eine Stellung zu bewegen, die der ermittelten Stellung entspricht, oder
- b) in einer Frequenzdomäne: Ermitteln von Mittenfrequenzen von Impulsen, die aufgezeichneten Signalamplituden entsprechen, und Ermitteln einer Stellung, die einer ermittelten Mittenfrequenz eines Impulses mit einer größten Abweichung von einem Frequenzwert entspricht, und Anweisen des Aktuators (30), den Windabweiser (3, 4) in eine Stellung zu bewegen, die der ermittelten Stellung entspricht.

15. Luftleitvorrichtung nach Anspruch 14, die ferner eine Filtereinheit (41) umfasst, die zum Eliminieren repetitiver Varianz in den aufgezeichneten Signalamplituden angeordnet ist.

## Revendications

1. Procédé d'optimisation d'une position d'un déflecteur d'air (3, 4) guidant un flux d'air autour d'un véhicule terrestre pendant la conduite, comprenant les étapes suivantes :
a) déplacement du déflecteur d'air (3, 4) au moyen d'un actionneur électrique (30) d'une première (p1) à une seconde position (p2) lorsque le véhicule se déplace dans le sens avant (100),
b) détection d'un paramètre de l'actionneur électrique (30) pour déplacer le déflecteur d'air (3, 4) de la première à la seconde position (p1 ; p2), et enregistrement d'une pluralité d'amplitude de signaux du paramètre détecté (101),
c1) dans une plage de temps, identification d'une section d'amplitudes de signaux enregistrées consécutives, laquelle section est définie par deux crêtes d'amplitude de signaux positives à chaque extrémité de la section, lesquelles crêtes d'amplitude de signaux positives excèdent une première valeur seuil, et une crête d'amplitude de signaux négative intermédiaire entre les deux crêtes d'amplitude de signaux positives, laquelle crête d'amplitude de signaux négative tombe en dessous d'une seconde valeur seuil, et identification d'une position correspondant à une crête d'amplitude de signaux dans la section identifiée présentant une déviation la plus élevée par rapport à la première ou la seconde valeur seuil (102a),
et/ou
c2) dans une plage de fréquence, identification de fréquences centrales d'impulsions correspondant à des amplitudes de signaux enregistrées, et identification d'une position correspondant à une fréquence centrale identifiée d'une impulsion présentant une déviation la plus élevée par rapport à une valeur de fréquence (102b), et
d) déplacement du déflecteur d'air (3, 4) vers la position identifiée (103).

2. Procédé selon la revendication 1, dans lequel l'actionneur électrique (30) est un moteur alternatif, un actionneur électromécanique, un moteur à courant alternatif sélectionné dans un groupe comprenant un moteur à induction, un moteur synchrone, un moteur à rotor coulissant et un moteur à répulsion, ou un moteur à courant direct sélectionné dans un groupe comprenant un moteur à balais et un moteur sans balais,
le paramètre détecté étant de préférence sélectionné dans un groupe comprenant le courant de l'actionneur électrique, la tension de l'actionneur électrique, les rotations par minute d'un rotor de moteur, la fréquence de commutation du moteur, la position d'un piston d'un moteur alternatif, la résistance du moteur, l'inductance du moteur et l'inertie du moteur.

3. Procédé selon l'une quelconque des revendications 1 - 2, dans lequel l'étape c1) est réalisée et les première et seconde valeurs seuils excèdent respectivement et tombent en dessous d'une valeur de signaux estimée pour chaque amplitude de signaux enregistrée à 5 %, lesquelles valeurs de signaux estimées sont basées sur un ensemble des amplitudes de signaux enregistrées.

4. Procédé selon l'une quelconque des revendications 1 - 2, dans lequel l'étape c1) est réalisée et les première et seconde valeurs seuils excèdent respectivement et tombent en dessous de 5 % en valeur moyenne, laquelle valeur moyenne est obtenue en divisant les amplitudes de signaux enregistrées en N fenêtres finies d'amplitudes de signaux consécutives et en définissant pour chaque fenêtre une valeur moyenne de toutes les amplitudes de signaux enregistrées dans la fenêtre.

5. Procédé selon l'une quelconque des revendications 1 - 2, dans lequel l'étape c1) est réalisée et les première et seconde valeurs seuils excèdent respectivement et tombent en dessous de 5 %, une valeur obtenue en divisant les amplitudes de signaux enregistrés en N fenêtres finies d'amplitudes de signaux consécutives et en définissant pour chaque fenêtre une valeur moyenne d'une amplitude de signal maximale et d'une amplitude de signal minimale dans la fenêtre.

6. Procédé selon l'une quelconque des revendications 1 - 2, dans lequel l'étape c1) est réalisée et les première et seconde valeurs seuils excèdent respectivement et tombent en dessous de 5 %, une valeur obtenue en divisant les amplitudes de signaux enregistrées en N fenêtres finies d'amplitude de signaux consécutives et en définissant pour chaque fenêtre une valeur moyenne d'une amplitude de signaux maximale et d'une amplitude de signaux minimale dans la fenêtre.

7. Procédé selon l'une quelconque des revendications 1 - 6, dans lequel l'étape c1) est réalisée et la valeur de fréquence est une fréquence de rotation de l'actionneur électrique de +/-2 %, ou +/-5 %, ou +/-10 %, ou +/-20 %, ou +/-30 %.

8. Procédé selon l'une quelconque des revendications 1 - 7, comprenant en outre une étape de suppression de la variation répétitive dans les amplitudes de signaux enregistrées (201),
la variation répétitive ayant de préférence une fréquence d'un dispositif d'alimentation électrique de l'actionneur électrique (30).

9. Procédé selon l'une quelconque des revendications 1 - 8, dans lequel le procédé comprend une étape supplémentaire (202) pour s'assurer que la position identifiée correspond à une position optimale ou ou proche d'une position optimale du déflecteur d'air (3, 4).

10. Procédé selon la revendication 9, dans lequel l'étape supplémentaire (202) comprend la répétition des étapes a), b) et c1) jusqu'à ce que les positions correspondant aux crêtes d'amplitude de signaux enregistrées identifiées présentant la déviation la plus élevée par rapport à la première ou seconde valeur seuil dans les étapes c1) de deux répétitions consécutives correspondent, l'étape d) est ensuite réalisée et le déflecteur d'air (3, 4) est déplacé vers la position identifiée (103).

11. Procédé selon la revendication 9, dans lequel l'étape supplémentaire (202) comprend la répétition des étapes a), b) et c2) jusqu'à ce que les positions correspondant aux fréquences centrales identifiées des impulsions présentant la déviation la plus élevée par rapport à la valeur de fréquence dans les étapes c2) de deux répétitions consécutives correspondent, l'étape d) est ensuite réalisée et le déflecteur d'air (3, 4) est déplacé vers la position identifiée (103).

12. Procédé selon la revendication 9, dans lequel l'étape c1) est réalisée et l'étape supplémentaire (202) comprend de manière continue, pendant le mouvement du déflecteur d'air (3, 4) de la première à la seconde position, l'enregistrement de valeurs d'un paramètre environnemental du véhicule et/ou du déflecteur d'air (3, 4) et la comparaison des amplitudes de signaux enregistrées à des valeurs enregistrées correspondantes du paramètre environnemental, sachant que, si la crête d'amplitude de signaux enregistrée identifiée présentant la déviation la plus élevée par rapport à la première ou seconde valeur seuil correspond à une valeur du paramètre enregistrée, cette crête d'amplitude de signaux est écartée comme représentative de la position optimale.

13. Procédé selon l'une quelconque des revendications précédentes, dans lequel seule une des étapes c1) et c2) est réalisée,
ou
les deux étapes c1) et c2) sont réalisées.

14. Dispositif de guidage d'air pour véhicule automobile terrestre, comprenant :
- un déflecteur d'air (3, 4) conçu pour guider un flux d'air autour du véhicule pendant la conduite, et
- un actionneur électrique (30) conçu pour déplacer le déflecteur d'air (3, 4) d'une première (p1) à une seconde position (p2) lorsque le véhicule se déplace dans un sens avant,
le dispositif de guidage d'air étant **caractérisé en ce qu'**il comprend en outre :
- un dispositif de détection (31) conçu pour détecter un paramètre de l'actionneur électrique (30) pendant que le déflecteur d'air (3, 4) est déplacé de la première à la seconde position (p1 ; p2) et enregistrant une pluralité d'amplitudes de signaux du paramètre détecté,
- une unité de commande (32) conçue pour :
- a) dans une plage de temps, identifier une section d'amplitudes de signaux enregistrées consécutives, laquelle section est définie par deux crêtes d'amplitudes de signaux positives à chaque extrémité de la section, lesquelles crêtes d'amplitudes de signaux positives excèdent une première valeur seuil, et une crête d'amplitude de signaux négative intermédiaire entre les deux crêtes d'amplitude de signaux positives, laquelle crête d'amplitude de signaux négative tombe en dessous d'une seconde valeur seuil, et identifier une position correspondant à une crête d'amplitude de signaux dans la section identifiée présentant une déviation la plus élevée par rapport à la première ou seconde valeur seuil, et en donnant à l'actionneur (30) l'instruction de déplacer le déflecteur d'air (3, 4) vers une position correspondant à la position identifiée, ou
- b) dans une plage de fréquence, identifier des fréquences centrales d'impulsions correspondant à des amplitudes de signaux enregistrées, et identifier une position correspondant à une fréquence centrale identifiée d'une impulsion présentant une déviation la plus élevée par rapport à une valeur de fréquence, et en donnant à l'actionneur (30) l'instruction de déplacer le déflecteur d'air (3, 4) vers une position correspondant à la position identifiée.

15. Dispositif de guidage d'air selon la revendication 14, comprenant en outre une unité de filtration (41) conçue pour supprimer la variation répétitive dans les amplitudes de signaux enregistrées.
